# EUROPEAN PATENT APPLICATION

(11) **EP 2 263 828 A1**
(43) Date of publication of application: **22.12.2010**
(21) Application number: 10162965.7
(22) Date of filing: 17.05.2010
(51) Int. Cl.: B23Q 11/00, G01N 1/04, G01N 33/38

(54) **Improved process for the analysis of materials, particularly construction materials, and device for effecting this process**

(30) Priority: 17.06.2009 IT MI20091073
(71) Applicant: Tecnoindagini S.r.l., 20032 Cormano (IT)
(72) Inventor: Felicetti, Roberto, 20136, MILAN (IT)
(74) Representative: Martegani, Franco

(57) **Abstract**

A process for the analysis of materials, particularly construction materials, which comprises the collection of at least one powder sample of said materials, maintaining the order of extraction of said powder in relation to the different collection depths of the same within said at least one sample. For this purpose, use is made of a device equipped with an interception head (1) of the falling of the powder (7) into an elongated container (2).

With respect to the known technology for the analysis of construction materials, that according to the invention offers the advantage of less damage subjected to the building, greater extraction rapidity of the sample and the possibility of immediately effecting tests which would otherwise require a much more complex preparation.

## Description

The present invention relates to an improved process for the analysis of materials, in particular construction materials. The same invention also comprises the device used for effecting this process.

The exposure of construction materials to atmospheric agents, aggressive chemical products and extreme environmental conditions such as fire, leads to their progressive deterioration which starts from the surface layers and penetrates to a depth which increases with the progression of the degradation process. The determination of the state of advancement of these phenomena is of particular interest in the projecting of maintenance work, the projecting of restoration interventions and property assessments for commercial and insurance purposes.

In the case of some common materials, such as concrete, stone, bricks, the examination of the degradation degree is often based on the extraction of cylindrical samples (cores), effected by means of a specific logging instrument, equipped with drill tools with a water-cooled diamond crown. In some cases, the core can be examined without the need for further operations, as in estimating the carbonation depth and in colorimetric and morphological analyses. It is quite often necessary however to divide it into a series of small samples to be analyzed separately, in order to reconstruct the trend of the properties of the material for increasing depths, starting from the surface of the product. For some laboratory analyses, it is also necessary for the samples to be preliminarily reduced into powder, as when determining the concentration of chlorine ions and thermogravimetric and thermo-differential tests.

The estimation of the surface degradation of construction elements starting from the extraction of cores, however, has various drawbacks. First of all, the collection of the samples requires the use of relatively costly equipment, which, due to the weight and vibrations produced, must be fixed to the product by anchoring wedges. The cooling of the tool generally requires a continuous water flow, with evident problems in the case of interventions in residential buildings. The dimension of the hole to be restored must also be considered, which varies from 20-25 mm of micro-cores to 100 mm and over of the samples destined for mechanical resistance tests. Due to the capacity of the tool of also cutting metals, damage to the armatures of concrete elements is also quite common, with a consequent reduction in the supporting capacity of the structure.

As far as the analysis of the sample is concerned, this becomes particularly difficult when the surface stratigraphy is to be reconstructed by means of a series of repeated tests on samples collected at increasing depths.

For the above reasons, an expert who is asked to express an opinion on the degradation state of a building must often resort to an adequately equipped external laboratory. In addition to the higher cost and time dilation necessary, this makes it more difficult to take into account the first results of the assays effected for the planning of further elaborations.

There are also some analysis examples in literature, effected by dividing the drill process into a series of consecutive steps and manually collecting the powder produced in each step. The limitation of this approach is represented by the longer time necessary for the collection and poor resolution of the analysis: the material removed in each phase is in fact treated as a homogeneous sample and it does not seem realistic to proceed with depth pitches of less than a centimetre.

The main objective of the present invention is to provide an improved process, and the device for effecting this, suitable for carrying out the analysis of materials, in particular construction materials, without the traditional necessity of extracting cylindrical samples (cores).

The invention also has the objective of providing a process and device as indicated above, which are capable of maintaining the extraction order of the powder sample and then tracing the possible degradation stratification undergone by the material.

A further objective of the invention is to provide a process and device of the above type, which are more reliable and less complex than those currently in use.

Yet another objective of the invention is to provide a process and device as specified above, which are capable of reducing the duration times of the assessment on the samples of material collected, the costs of the relative equipment and damage caused to the structure.

Another objective of the invention is to provide a process and device as specified above, which allow various analyses to be effected immediately, without the necessity of further manipulations of the powder.

These and other objectives are achieved with the process and device of claims 1 and 6 respectively. Preferred embodiments of the invention are indicated in the remaining claims.

With respect to the known technology for the analysis of construction materials, that according to the invention offers the advantage of the least damage caused to the building, the greater extraction rapidity of the sample and possibility of immediately effecting tests which would otherwise require a much more complex preparation. In the experimental tests for determining the carbonation depth of concrete cubes, for example, it was observed that the duration of a test on a micro-core, even under optimum laboratory conditions and without limitations in the energy supply and use of cooling water of the tool, requires on an average about 10 minutes (taking into account the necessity of allowing the sample to partially dry before applying the alkalinity detector). The drill tests, on the other hand, were effected by means of a battery drill, without the use of cooling water and for a total time of not more than a minute.

A further example is represented by thermo-differential analyses which, in addition to the extraction of a core, comprise its division into disks and the extraction from these of small samples to be reduced to powder. In the method proposed, on the other hand, the preparation of the sample is limited to the drilling of the wall to be examined, which can require a few tens of seconds. This is followed by the actual implementation of the test which, in the method proposed, is carried out simultaneously on different powder samples. Even if this approach is less rigorous than a laboratory analysis with specific equipment, in any case it allows some important characteristics of the material to be identified, such as its preventive exposure to the high temperatures produced by a fire.

These and other objectives, advantages and characteristics appear evident from the following description of a preferred embodiment of the device and process of the present invention shown, for illustrative and non-limiting purposes, in the figures of the enclosed drawings. In these:
- figure 1 illustrates an axonometric view of the components of the device of the invention;
- figure 2 illustrates a longitudinal side section of the components of figure 1, cooperating with the drill bit of a drill;
- figures 3A, 3B, 3C illustrate some examples of test-tubes provided on the device of figure 1;
- figures 4 to 6 illustrate some examples of stratified materials, the relative test samples obtained with the device of the invention and the diagrams of the corresponding chromatic variations along the axis of the corresponding test-tubes, respectively;
- figures 7 and 8 illustrate some samples of powder and a micro-core extracted from a same concrete test sample, and the variations in the carbonation depth along the perimeter of a core, as resulting from the treatment of these samples with a pH detector;
- figures 9 and 10 illustrate the chromatic alteration of a concrete test sample, in powder and in a core, exposed to a heat gradient and, respectively, the profiles of the chromatic alteration obtained from an analysis of the digital images of these two samples;
- figures 11 to 13 respectively represent the collection of drill powder with the device of the invention equipped with a perforated test-tube, the positioning of the test-tube in the oven and the graphs of the temperature differences with respect to the inert reference material.

According to the invention, the powders produced during the drilling of a product made of concrete, stone or brick, are continuously collected by means of a common percussion drill with masonry bits. The result is an ordered powder sample inside a test-tube: the first powder extracted is collected at the bottom of the test-tube and the last at the top of the same.

Among the possible applications of the invention, tests for the determination of the carbonation depth of concrete, the concentration of chlorine ions and humidity content, thermogravimetric and thermo-differential analyses, can be mentioned. In all of these cases, the essential point is in fact the possibility of maintaining the order of extraction of the sample and then tracing the possible stratification of degradation which the material has undergone.

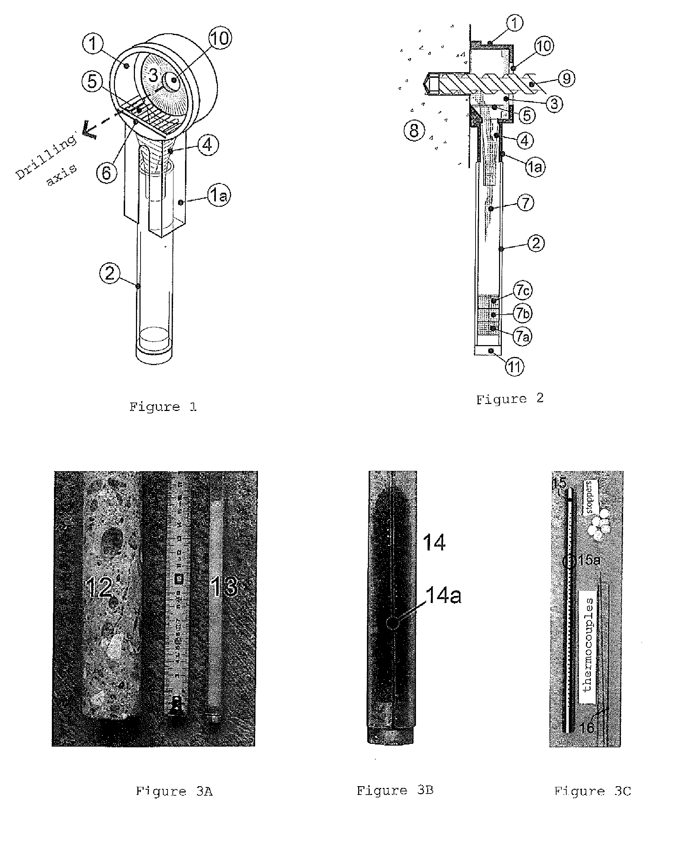

The device used for effecting the collection of drill powders described above, is illustrated in the enclosed figures 1 and 2, of the gravity collection type. This device, which exploits the simple falling of the powder produced during the drilling, comprises an interception head 1 and a collection test-tube 2 of the powder 7 generated by the drilling action, on the sample 8 to be analyzed (for example concrete), of the drill bit 9. This head is glass-shaped and is provided, on the bottom, with a sealing element 3 through which the drill bit 9 passes, in correspondence with a respective hole 10. In its lower side, the head 1 has a funnelled duct 4 which sends the powder 7 along the axis of the test-tube 2, depositing it according to consecutive horizontal layers 7a,7b,7c, etc. on its bottom 11. Once the verticality of the test-tube has been guaranteed, this component prevents the powder from sliding along the walls of the same test-tube, thus preventing the powder from being deposited in oblique layers. An adapter collar 1a of the interception head 1 allows the test-tube 2 to be removably fixed thereon. A grid 5, on the other hand, situated at the top of the funnel 4, withholds any possible grosser fragments of material, preventing blockage of the duct. Finally, a sealing element 6 along the upper edge of the funnel 4 facilitates adaptation to the irregularity of the surface, preventing the leakage of the powder along the wall.

As illustrated in figures 3A,3B,3C, the collection test-tube 2 of the powders can be adapted to the type of analyses which is to be effected on the material of the test sample 8. The use of a transparent test-tube 13 (in figure 3A compared with a core 12 of the same material) therefore allows the regular supply of powder to be verified during the drilling and the length of the sample collected to be determined, which is then related to the effective depth of the hole. A further advantage lies in being able to effect a first visual examination of the sample, revealing, for example, possible chromatic alterations of the powder.

Again, in order to allow the analysis of the sample without manipulations inside the test-tube 14 of figure 3B, a thin cut 14a along the generatrix of the same test-tube, having a width which is such as to prevent the leakage of the powder granules, enables the introduction of the liquid reagents for the chemical analysis (e.g. the solution of phenolphthalein for the carbonation tests). The same result can also be obtained with the use of suitable filtrating agents.

The test-tube 15 of figure 3C, produced with a material resistant to high temperatures (for example nickel-chromium), allows the sample to be subjected to a thermo-differential analysis. In this case, a series of small holes 15a along a generatrix allows the insertion of the thermocouples 16, necessary for measuring the variation in temperature. Alternatively, it is possible to create test-tubes which can be opened or divided into segments, to allow the removal of small quantities of powder to be analyzed separately, according to normal laboratory practice (analysis of the content of chlorine ions, X-ray diffractometry, thermogravimetric analysis, etc.).

In any case, the simplest type of test-tube consists of a transparent tube made of plastic material (internal diameter in the order of 10 mm) and a small pressurized aluminium stopper. It should be noted that the internal diameter of the test-tube and the diameter of the bit used determine the scale ratio between the depth of the hole obtained and the length of the powder sample produced. Bits having a diameter of 10 mm are advantageously preferred, which represent a good compromise between the demands of limiting the damage to the product and reducing the side surface of the hole which, due to the continuous abrasion of the bit, tends to contaminate the material extracted in depth with particles coming from the layers closest to the surface. With the geometry adopted, and taking into account the lower apparent density of the pulverized material, an average scale ratio of about 2:1 is obtained (the sample obtained is twice as long as the depth of the hole), which improves the sensitivity of the evaluations effected on the powder. It is advisable however to obtain the scale ratio which characterizes each collection of material, each time.

### Experimental verification of the device of the invention and comparison with the current method

The device of the invention was used for effecting two types of verification: the first has the purpose of confirming the effective separation of the material extracted at the various depths, the second is for a comparison, in operative terms, with the traditional techniques in the case of some particular types of analyses (colorimetry, determination of the carbonation depth in the concrete end-products and thermo-differential analysis).

### Verification of the effective ordering of the material extracted

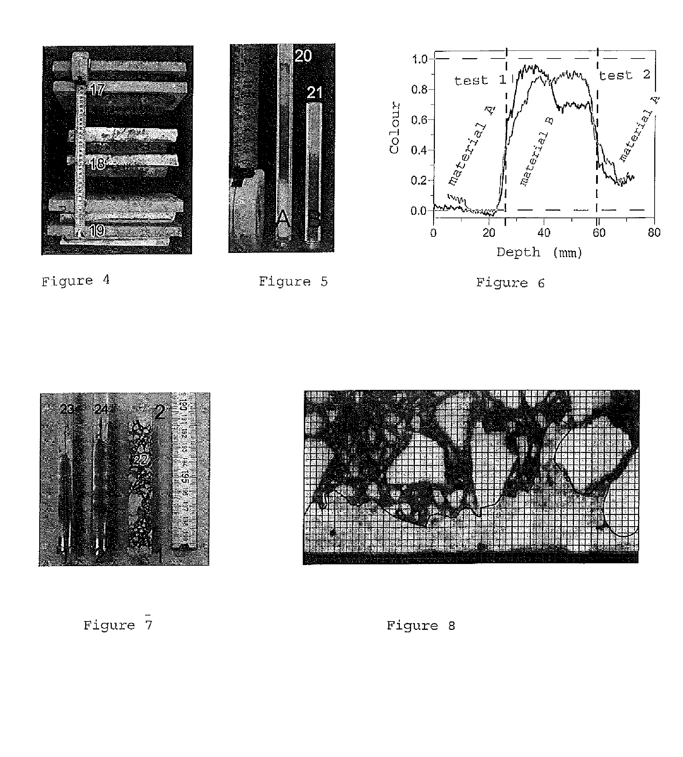

For this first examination, stratified test samples 17, 18, 19 were constructed, by gluing various stone or brick sheets having different colours, with epoxy resin (figure 4). The test samples were then perforated, operating in a horizontal direction and collecting the powder produced with the device of the invention. The powder samples, collected in transparent test-tubes 20 and 21, were subsequently photographed with a digital camera.

From the digital images, it is possible to obtain the three chromatic components of each point of the sample (red, green and blue values of the RGB colorimetric system). The exact colour of each material in the pure state was obtained separately by removing powder from homogeneous reference test-samples. In the case of the stratified test samples, the chromatic variation between one layer and another takes place within the range between the two points of the three-dimensional RGB space which represent the reference colour of each material. By analyzing the image along a longitudinal section of the test sample, it is therefore possible to quantitatively evaluate the purity of the powder sample on the basis of its chromaticity. To facilitate the reading, the values were normalized within the range between 0 (material A) and 1 (material B).

The diagram of figure 6 shows an example of this representation for the brick and calcarenite test sample 18 (the abscissa was scaled on the effective depth of the hole). It can be observed that up to about 40 mm of depth, the powders maintain a good purity, with a well-defined variation in the colour with the first change of material.

As the depth increases, the effect of the abrasion of the side walls of the hole also increases, which, at a depth of 60 mm, produces a sample of the material A of figure 5 which is no longer pure, but mixed with about 20% of material B. Due to the same effect, discontinuities can be observed in correspondence with possible oscillations of the drill point, as shown by test 1 at about 40 mm of depth.

A first observation is that it is difficult for the analyses on the degradation of the materials and durability of the building structures to reach depths greater than 50 mm and consequently for the accuracy of the device used to be adequate for this type of application. Furthermore, due to the order of the collection, from the outside towards the interior of the construction element, the possible contamination of the sample leads to a slight over-estimation of the degradation of the material: the integral material inside the element can become mixed with a fraction of the more external material, but the contrary is not possible.

### Comparisons with the current method

As far as the comparison of the traditional survey techniques are concerned, measurements were effected on concrete samples relating to the carbonation depth, chromatic alteration due to exposure to fire and the physico-chemical transformations caused by exposure to high temperature (thermo-differential analysis).

### Measurements of the carbonation depth

The measurements of the carbonation depth were related to various concrete cubes (side = 100 mm) exposed to an atmosphere enriched in carbon dioxide, and therefore such as to accelerate the development of the phenomenon. These tests were carried out with the collaboration of Prof. Luca Bertolini of the Chemistry Department of the Milan Polytechnic.

Micro-cores 22 (ø = 17 mm) were extracted from the cubes, on which the carbonation depth was determined by means of a pH determination indicator. The carbonated area is revealed by the lighter coloured areas at the ends of the samples (figure 7). The measurement was then repeated by perforating the cubes with a percussion drill and collecting the powder in transparent test-tubes 23, 24 having a side cut to allow the treatment with the same pH detector used for the traditional technique.

As can be seen in figure 8, the powder treated shows the same chromatic alteration as the micro-cores, even if the specific thickness is amplified by the ratio between the length of the powder sample and the depth of the hole (equal to about 2:1 in these tests). A comparison between the two types of analysis leads to average values of 7 and 10 mm determined on the core, against the corresponding estimated depths of 6 and 8 mm on the powder samples. Differences of this order of magnitude are completely comparable with the dispersion of the results, specifically of each technique.

In some cases, the comparison between the pairs of measurements is made more difficult by the fact that, due to the aggregates, the carbonated thickness can have an irregular profile, with even considerable percentage variations (from 5 to 20 mm along the whole perimeter of the micro-core of Figure 7). Vice versa, it can be assumed that the powder sample already provides an average alkalinity value of the material at a certain depth, which facilitates the determination of a representative value for the point examined (in this case the average depth of about 7 mm in the micro-core is compared with the 6 mm of powder samples extracted from the same cube).

### Measurements of the chromatic alteration produced by exposure to fire

Exposure to the high temperatures of a fire slightly modifies the colour of concrete, which initially tends towards pink-red shades (300-600 °C), then whitish-grey (600-900 °C) and finally yellow-brown (900-1000 °C). This alteration is often used as an indicator of the maximum temperature reached during the fire, and therefore of the damage suffered by the structure. In particular, the pink-red colouring, which derives from the oxidation of iron compounds in the aggregates, is of particular practical importance, as its appearance coincides with the start of significant losses in resistance of the concrete.

The identification of the chromatic variation towards red, once entrusted to a visual examination on the part of an expert, can currently be determined with great accuracy by means of instrumental measurements on cores, with the use of spectrophotometers, colorimeters or digital cameras.

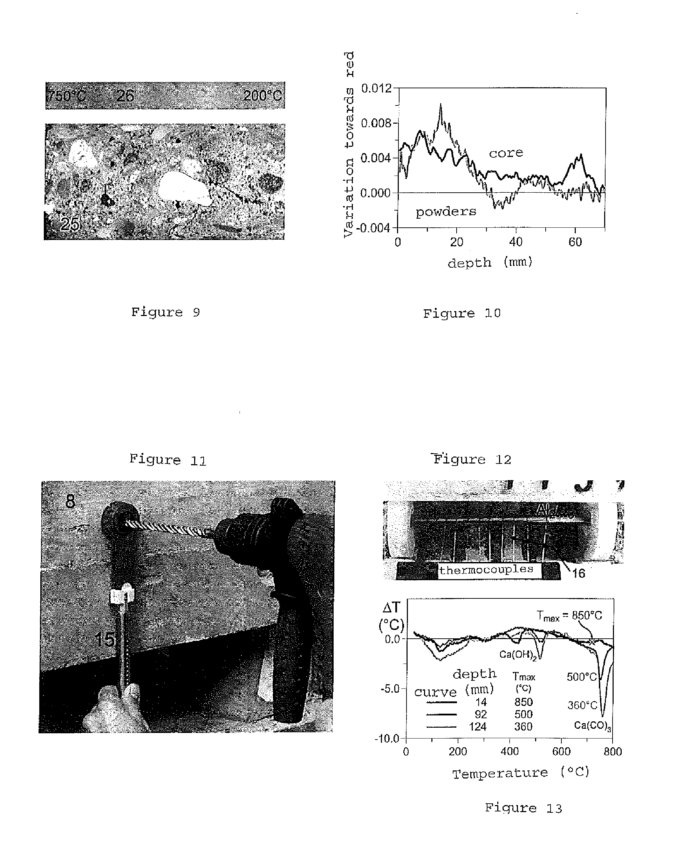

In particular, the technique based on the processing of digital images allows a direct comparison between the traditional cored sample 25 and an ordered powder sample collected inside a transparent test-tube 26 (figure 9). As the natural colour of the conglomerate depends on the components of the mixture used, the chromatic alteration is determined by comparison with the material collected from the deepest layers, which can be assumed to have not undergone significant transformations. From the diagram of figure 10, taking into account the inevitable local variations due to the presence of aggregates, it can be concluded that the measurements obtained from the two samples are in alignment.

### Thermo-differential analysis on concrete samples

Figures 11 and 12 illustrate the collection of the drill powder, from a test sample 8, by means of the perforated test-tube 15 of figure 3C, and the positioning of the test-tube in an oven, with the thermocouples inserted at a constant pitch in the holes. The curves shown in figure 13 represent the differences in temperature with respect to the inert reference material, relating to three significant points of the test sample 8, previously exposed to a strong heat gradient (from 900°C to 200°C in 150 mm).

The concrete exposed to high temperatures undergoes a series of physico-chemical transformations, often irreversible, which cause a deterioration in its mechanical performances and durability. These transformations are often accompanied by a heat absorption (endothermic transformations), which is only revealed when a certain temperature is first reached.

The thermo-differential tests allow the occurrence of these transformations to be identified, through a measurement of the temperature difference between a sample of material under examination and a reference sample of nonreactive material (e.g. aluminium oxide), which are subjected to the same heating at a constant rate. The test is effected on small samples of pulverized material and has a duration of a few hours, which makes it particularly onerous if the profile of the surface degradation is to be reconstructed through a series of repeated measurements on samples taken at different depths.

In order to overcome this limitation, the possibility was verified of effecting a series of tests simultaneously, operating on an ordered sample of drill powder, whose temperature during the heating is measured in various points, corresponding to different collection depths. In this case, the reference test-tube 15 consists of a metallic tube resistant to high temperatures (nickel-chromium) and having a series of holes along a generatrix (figure 11). During the extraction, the holes are closed by means of a strip of adhesive tape and the lower end is plugged by a ceramic fibre cylinder. After collecting the powder, a small quantity of aluminium oxide is introduced into the same tube, which acts as a reference. The upper end is then also plugged and the tube is arranged horizontally, removing the adhesive tape. The measurement thermocouples are distributed along the extension of the sample, inserting them in the holes and carefully positioning one of them in correspondence with the aluminium oxide powder. The holes remaining free allow the gases imprisoned during the test (water vapour, CO₂) to be expelled.

The test consists of heating at a constant rate (e.g. 5°C/min), during which the temperatures measured by the thermocouples are registered. The differences in temperature with respect to the inert reference material are then diagrammed. Figure 13 shows the results relating to a concrete panel already exposed to heating on one side alone, which produced a strong heat gradient along the thickness. It can be observed that the poor reactivity of the material, previously exposed to high temperatures and which has undergone most of the physico-chemical transformations, can be easily recognized with respect to a material less damaged by the temperature.

Modifications can be applied to the invention, as described and illustrated in the figures of the enclosed drawings, to obtain variants which are included however in the scope of the following claims. For example, the structure of the powder collection device can envisage the production of the interception head 1 integrally with the funnelled duct 4, the sieving grid 5 and blocking collar 1a of the test-tube 2. The latter can also be connected to the head 1 by means of an articulated connection to allow the device to be used also during drillings in a direction other than horizontal. Finally, the collection test-tubes of the powders can be produced with any material suitable for the purpose, and can also comprise an openable structure, which is useful for collecting small powder samples to be analyzed separately.

## Claims

1. A process for the analysis of materials, particularly construction materials, **characterized in that** it comprises the collection of at least one powder sample of said materials, maintaining the order of extraction of said powder in relation to the different collection depths of the same within said at least one sample.

2. The process according to claim 1, **characterized in that** said collection of at least one powder sample is effected by gravity, by drilling said materials and collecting the powder produced during the above drilling by simple falling.

3. The process according to claim 2, **characterized in that** it comprises the ordered collection of said at least one powder sample inside an elongated container, the first powder extracted being positioned at the bottom of this container, the last at the top.

4. The process according to claim 3, **characterized in that** the above at least one powder sample is collected in an orderly and continuous manner, inside said container, according to consecutive horizontal layers which express the different collection depths of said powder.

5. The process according to one or more of the previous claims, **characterized in that** the above powder sample is subjected to consecutive laboratory analyses, in particular colorimetric analysis, thermo-differential analysis, analysis of the content of chlorine ions, X-ray diffractometry, thermogravimetric analysis and measurement of the carbonation depth of concrete.

6. A device for effecting the process according to one or more of the previous claims, **characterized in that** it comprises means suitable for collecting the drill powders of said materials, ordered according to the different collection depths of the same.

7. The device according to claim 6, **characterized in that** said powder collection means comprise an interception head (1) of the falling of the powder (7) inside an elongated container (2).

8. The device according to claim 7, **characterized in that** the above head (1) is glass-shaped and is provided, on the bottom, with a sealing element (3) through which the drill bit (9) of a drill passes in correspondence with a respective hole (10).

9. The device according to claim 8, **characterized in that** said head (1) is provided, in correspondence with its lower part, in its operating position, with a funnelled duct (4) which conveys the powder (7) along the axis of the above container (2), depositing it according to consecutive horizontal layers (7a,7b,7c) on the bottom (11) thereof.

10. The device according to claim 9, **characterized in that** the above head (1) is also provided with a collar (1a) for removably blocking said container (2).

11. The device according to claim 9, **characterized in that** it also comprises a grid (5) situated at the top of the above-mentioned funnel (4), suitable for withholding possible grosser fragments of material, a sealing element (6) assembled along the upper edge of the same funnel (4), to facilitate adaptation to irregularities of the surface, preventing leakage of the powder along the wall.

12. The device according to one of the claims from 7 to 11, **characterized in that** said container (2) consists of a test-tube (13) made of a transparent material.

13. The device according to one of the claims from 7 to 11, **characterized in that** said container (2) consists of a test-tube (14) provided with a longitudinal cut (14a) having a width which is such as to prevent the leakage of the powder granules, but sufficient to allow the introduction of liquid reagents for chemical analysis.

14. The device according to one of the claims from 7 to 11, **characterized in that** said container (2) consists of a test-tube (15) made of a material resistant to high temperatures, equipped with a series of small holes (15a), ordered along a generatrix of the same and suitable for allowing the insertion of thermocouples (16) necessary for effecting thermo-differential analyses.

15. The device according to one or more of the previous claims, **characterized in that** it comprises an articulated connection between the interception head (1) and the funnelled duct (4).
